# EUROPEAN PATENT APPLICATION

(11) **EP 4 836 437 A1**
(43) Date of publication of application: **04.11.2026**
(21) Application number: 24918329.4
(22) Date of filing: 23.12.2024
(51) Int. Cl.: H04Q 11/00

(54) **OPTICAL DISTRIBUTION NETWORK, OPTICAL DISTRIBUTION SYSTEM AND OPTICAL POWER DISTURBANCE METHOD**

(30) Priority: 17.01.2024 CN 202410068392
(71) Applicant: ZTE CORPORATION, Shenzhen, Guangdong 518057 (CN)
(72) Inventor: ZHU, Songlin, Shenzhen, Guangdong 518057 (CN); XIE, Yunpeng, Shenzhen, Guangdong 518057 (CN); HE, Zhimin, Shenzhen, Guangdong 518057 (CN); ZHAO, Meng, Shenzhen, Guangdong 518057 (CN)
(74) Representative: Canzler & Bergmeier Patentanwälte Partnerschaft mbB
(86) International application number: PCT/CN2024/141388
(87) International publication number: WO 2025/152721

(57) **Abstract**

Provided in the present disclosure are an optical distribution network, an optical distribution system and an optical power disturbance method. The optical distribution network comprises a doped optical waveguide, wherein an optical detection signal changes, in the doped optical waveguide, an absorption coefficient of a service optical signal, so as to adjust the power of the service optical signal; and the wavelength of the optical detection signal is different from the wavelength of the service optical signal.

## Description

### CROSS REFERENCE TO RELATED APPLICATIONS

The present disclosure claims the priority to Chinese Patent Application No. 202410068392.9 filed on January 17, 2024, the contents of which are incorporated herein by reference in their entirety.

### TECHNICAL FIELD

The present disclosure relates to the technical field of communications, and in particular, to an optical distribution network, an optical distribution system, and an optical power perturbation method.

### BACKGROUND

A Passive Optical Network (PON) is a point-to-multipoint network, can provide a higher bandwidth, and mainly includes an Optical Line Terminal (OLT) at a central office side, an Optical Network Unit (ONU) or an Optical Network Termination (ONT) at a customer side, and an Optical Distribution Network (ODN). Compared with point-to-point topology, the PON can reduce a cost of optical fibers, but the PON has a complex structure, which affects fault detection and topology visualization.

In order to facilitate the topology visualization and the fault detection, the technicians in the related technology improve the PON, by disposing a power change component at an output port of each optical splitter, different output ports correspond to different power change components, and different power change components have different influences on a power variation of a service optical signal, so that the output ports of the optical splitter can be determined based on a corresponding relationship between power variations of the service optical signal and the output ports of the optical splitter, thereby realizing the topology visualization and the fault detection. However, PUMP light is to be used in cooperation with the power change component for achieving an adjustment to a power of the service optical signal. Further, the ODN has a complex structure, resulting in a complex structure and a relatively high manufacturing cost of the PON.

### SUMMARY

In a first aspect, the present disclosure provides an optical distribution network, including a doped optical waveguide in which an optical detection signal changes an absorption coefficient of a service optical signal to adjust a power of the service optical signal; a wavelength of the optical detection signal is different from a wavelength of the service optical signal.

In a second aspect, the present disclosure provides an optical distribution system, including an optical detection signal transceiver module, an Optical Line Terminal (OLT) optical transceiver module, an optical network termination, and the optical distribution network provided in the first aspect of the present disclosure, the optical distribution network is configured to enable a signal connection between the optical detection signal transceiver module and the optical network termination and enable a signal connection between the OLT optical transceiver module and the optical network termination.

In a third aspect, the present disclosure provides an optical power perturbation method performed by the optical distribution system provided in the second aspect of the present disclosure, including: adjusting a power of a service optical signal in a doped optical waveguide by using an optical detection signal; the optical detection signal adjusts the power of the service optical signal by changing an absorption coefficient of the service optical signal in the doped optical waveguide.

### BRIEF DESCRIPTION OF DRAWINGS

FIG. 1 illustrates an architecture of a PON according to the present disclosure.
FIG. 2 is a schematic diagram illustrating a principle of excitation during a PUMP light and a service optical signal being transmitted in a doped optical waveguide.
FIG. 3 is a schematic diagram illustrating an operation principle of a doped optical waveguide according to the present disclosure.
FIG. 4 is a schematic structural diagram of an optical distribution network according to the present disclosure.
FIG. 5 illustrates an absorption spectrum of an erbium-doped optical waveguide for a single wavelength.
FIG. 6 illustrates an absorption spectrum of an erbium-doped optical waveguide for two wavelengths.
FIG. 7 illustrates an absorption spectrum of an erbium-doped optical waveguide for three wavelengths.
FIG. 8 is a block diagram of a tunable-wavelength dual-mode optical transmission module according to the present disclosure.
FIG. 9 is a block diagram of a tunable-wavelength dual-mode optical transmission module according to the present disclosure.
FIG. 10 is a transmission spectrum diagram of optical signals blocked or attenuated by a band-stop or narrowband reflective filter.
FIG. 11 is a transmission spectrum diagram of service optical signals and optical detection signals transmitted through a bandpass filter according to the present disclosure.
FIG. 12 is a block diagram of an electronic device according to the present disclosure.

### DETAILED DESCRIPTION OF EMBODIMENTS

In order to enable those of ordinary skill in the art to better understand the technical solutions of the present disclosure, an optical distribution network, an optical distribution system, and an optical power perturbation method provided in the present disclosure are described in detail below with reference to the drawings.

Exemplary embodiments will be described more fully below with reference to the drawings, but the exemplary embodiments described herein may be implemented in different forms, and the present disclosure should not be interpreted as being limited to the implementations described herein. The implementations are provided to make the present disclosure thorough and complete, and may enable those of ordinary skill in the art to fully understand the scope of the present disclosure.

The implementations described herein and the features therein can be combined with one another if no conflict is incurred.

The term "and/or" used herein includes any and all combinations of at least one associated listed item.

The terms used herein are merely used to describe particular implementations, and are not intended to limit the present disclosure. As used herein, "a" and "the" which indicate a singular form are intended to include a plural form, unless otherwise expressly stated in the context. It should be further understood that the term "include" and/or the term "be made of" used herein indicates the presence of the particular features, integers, operations, elements and/or components list later, but do not exclude the presence or addition of one or more other features, integers, operations, elements, components and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

In the present disclosure, unless otherwise specified, the following technical terms should be understood based on the following explanations.

A light source is configured to generate a service optical signal and an optical detection signal.

In a Wavelength Division Multiplexing (WDM) module, optical signals (carrying information) with two or more different wavelengths are combined by a multiplexer at a transmitting end, and are coupled into an optical waveguide for transmission; at a receiving end, the optical signals with the different wavelengths are split by a demultiplexer and are further processed by an optical receiver, thereby recovering original signals. The technique of simultaneously transmitting the optical signals with two or more different wavelengths in a same optical fiber is referred to as WDM; the WDM module transmits the optical signals based on the technique of WDM.

An optical splitter is a convergence device provided with at least one input port and a plurality of output ports, and typically distributes power proportionally to a plurality of split optical links.

A filter refers to a device for selecting a wavelength, and can select or filter out a certain wavelength from optical signals with a plurality of wavelengths.

A doped optical waveguide is an optical waveguide doped with a certain element, and absorbs input optical signals with different wavelengths based on intrinsic parameters of a doping element. The doping element may be erbium ions, thulium ions, neodymium ions, or yttrium-ytterbium co-doped ions, which is not limited in the present disclosure. A type and a content of the doping element and a length of the doped optical waveguide each affect absorption of the input optical signals.

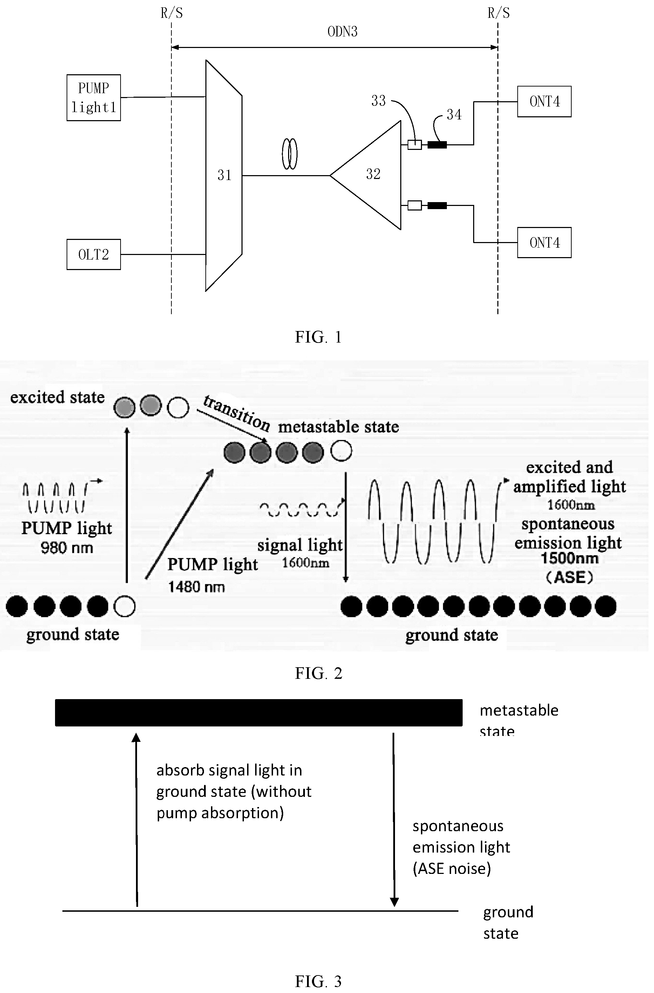

FIG. 1 is a schematic diagram illustrating an architecture of a PON. As shown in FIG. 1, the PON includes a PUMP light 1, an OLT 2, an ODN 3, and ONTs 4, the PUMP light 1 is configured to generate an optical detection signal, the OLT2 is configured to generate a service optical signal, and the PUMP light 1 and the OLT2 are in signal connection with the ONTs 4 through the ODN 3. The ODN 3 includes a WDM module 31, an optical splitter 32, and filters 33. The optical detection signal generated by the PUMP light 1 is transmitted to the ONT 4 after sequentially passing through the WDM module 31, the optical splitter 32, and the filter 33.

For visualizing a topology of the PON , the filters 33 and doped optical waveguides 34 are disposed at output ports of the optical splitter 32, and a corresponding relationship between power variations of the service optical signal and the output ports of the optical splitter 32 is derived from a corresponding relationship between center wavelengths of the filters and the output ports of the optical splitter 32 and a corresponding relationship between the doped optical waveguides and the power variations of the service optical signal, so as to realize a visualization of the topology of the PON .

In the related technology, the PUMP light 1 for visualizing the topology of the PON is configured to convert a power of a PUMP light into a power of a signal light, and doped ions in the doped optical waveguides have three energy levels, i.e., an E1 energy level, an E2 energy level, and an E3 energy level, the E1 energy level represents a ground state with a minimum power, the E2 energy level represents a metastable state with an intermediate power, and the E3 energy level represents an excited state with a maximum power. In response to a photon power of a detection light being equal to a power difference between E3 and E1, the doped ions absorb the power of the detection light to transition from the ground state to the excited state, that is, the ions at the E1 energy level transition to the E3 level. However, since the ions in the excited state are not stable, the ions may transition to the E2 energy level or the E1 energy level, and the process of transitioning may amplify the service optical signal and may also generate spontaneous emission light.

FIG. 2 is a schematic diagram illustrating a principle of excitation during a PUMP light and a service optical signal being transmitted in a doped optical waveguide. As shown in FIG. 2, a doping element in the doped optical waveguide transitions from the ground state to the excited state under a radiation of a PUMP light with a wavelength of 980 nm, and transitions from the ground state to the metastable state under a radiation of a PUMP light with a wavelength of 1480 nm. The doping element in the excited state is not stable and is likely to transition from the excited state to the metastable state. The doping element in the metastable state is also not stable and is likely to transition from the metastable state to the ground state. In the process of transitioning from the metastable state to the ground state, a spontaneous emission light with a wavelength of 1500 nm is generated, and a service optical signal with a wavelength of 1600 nm is excited to be amplified, that is, a part of a power of the PUMP light is converted into the service optical signal, and another part of the power of the PUMP light is converted into the spontaneous emission light.

Such method for amplifying the service optical signal requires not only the PUMP light which is array light, but also a cooperation of an optical switch, which causes a complex structure of the PON. Moreover, in order to achieve a desired perturbation effect, a plurality of doped optical waveguides are disposed at the output ports of each optical splitter 32, which increases complexity of the structure of the PON and manufacturing cost of the PON.

In order to solve the technical problem mentioned above, the present disclosure provides an optical distribution network, an optical distribution system, and an optical power perturbation method, which adjust a power of a service optical signal through a doped optical waveguide. Since the doped optical waveguide operates on a principle different from that based on the PUMP light, no PUMP light is required, and a simple structure is realized, which reduces the cost of the PON.

In order to facilitate to understand the optical distribution network, the optical distribution system, and the optical power perturbation method provided in the present disclosure, an operating principle of the doped optical waveguide in the present disclosure is described below.

FIG. 3 is a schematic diagram illustrating an operating principle of a doped optical waveguide according to the present disclosure. As shown in FIG. 3, in response to a wavelength of an optical signal being within an absorption spectrum of the doped optical waveguide, the doping element in the doped optical waveguide has the ground state and the metastable state, and in response to the doping element absorbing a power of the optical signal, the doping element transitions from the ground state to the metastable state; in response to the doping element in the metastable state transitions to the ground state, the absorbed power of the optical signal is converted into Amplified Spontaneous Emission (ASE) noise, and the power of the optical signal is changed. An optical power attenuation (dB) resulting from an optical signal with a certain wavelength being absorbed by a doped fiber with a unit length (m) and converted into ASE noise is referred to as an absorption coefficient of the optical signal. More importantly, ASE noises converted from the optical signals with different wavelengths are different in magnitude, that is, the absorption coefficient of the optical signal is related to a feature of the doped optical waveguide. The technical solutions in the present disclosure are proposed by making use of the feature of the optical signal in the doped optical waveguide.

In response to merely the service optical signal being transmitted in the doped optical waveguide, due to an absorption effect (also called a power absorption effect) of the doped optical waveguide, a part of the power of the service optical signal within the absorption spectrum of the doped optical waveguide is absorbed by the doped optical waveguide, and is converted into ASE noise, resulting in an attenuation of the service optical signal.

In response to both the service optical signal and an optical detection signal being transmitted in the doped optical waveguide, the doped optical waveguide generates a new absorption effect on the service optical signal and the optical detection signal because a wavelength of the optical detection signal is different from that of the service optical signal. A part of a power of the optical detection signal within the absorption spectrum of the doped optical waveguide is converted into ASE noise, which reduces the power of the service optical signal converted into ASE noise, that is, reducing an absorption coefficient of the service optical signal. Thus, the power of the service optical signal, which is converted into ASE noise, within the absorption spectrum of the doped optical waveguide is reduced, and an attenuation effect of the service optical signal is weakened, an insertion loss of the doped optical waveguide for the service optical signal is accordingly reduced, and the service optical signal received by the ONT is indirectly enhanced.

In the present disclosure, the wavelength of the optical detection signal is different from that of the service optical signal, and optical signals with different wavelengths cause an insertion loss of the doped optical waveguide for the optical detection signal to vary. Moreover, in response to an optical intensity of the optical detection signal being greater, the power of the optical detection signal converted into ASE noise is increased, and the attenuation effect of the service optical signal is weakened. In response to the wavelength of the optical detection signal being in an absorption peak band of the doped optical waveguide (i.e., the doped optical waveguide has a peak absorption effect in the band), the power of the optical detection signal converted into ASE noise is further increased, and the attenuation effect of the service optical signal is accordingly further weakened.

It should be noted that the optical detection signal injected into the doped optical waveguide may be at a single wavelength or a plurality of wavelengths, which is not limited in the present disclosure.

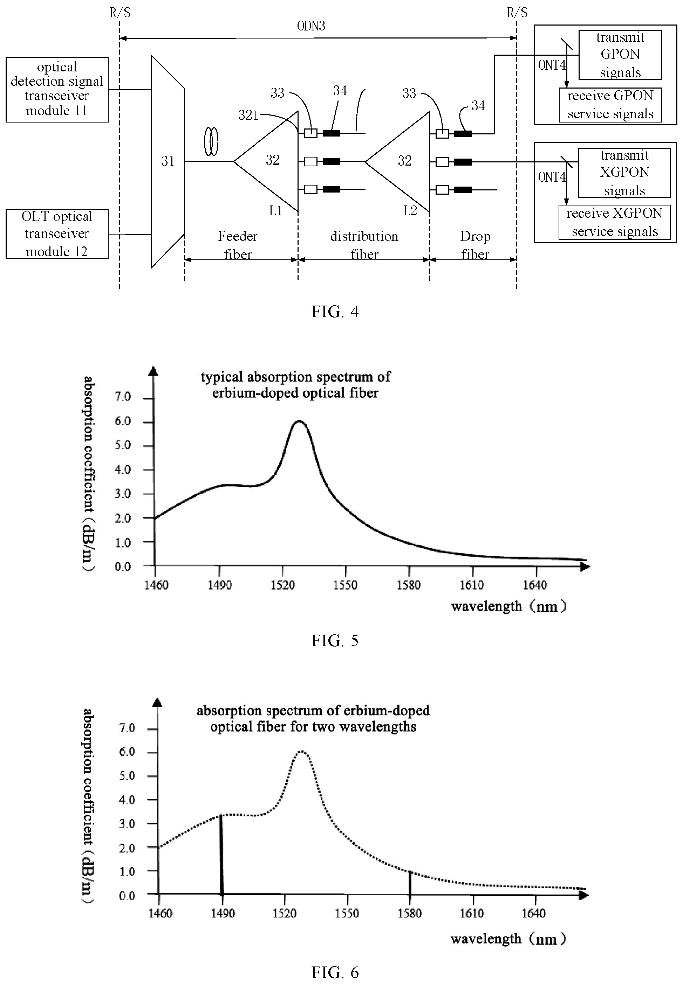

In a first aspect, the present disclosure provides an optical distribution network. FIG. 4 is a schematic structural diagram of an optical distribution network according to the present disclosure. As shown in FIG. 4, the optical distribution network includes doped optical waveguides 34 in which an optical detection signal changes an absorption coefficient of a service optical signal to adjust a power of the service optical signal; a wavelength of the optical detection signal is different from a wavelength of the service optical signal.

In response to the optical detection signal and the service optical signal being transmitted in the doped optical waveguides, a part of a power of the optical detection signal is converted into ASE noise, compared with that merely the service optical signal is transmitted in the doped optical waveguides, since a part of ASE noise comes from the optical detection signal, an attenuation effect of the service optical signal is weakened, that is, an insertion loss of the service optical signal is reduced, which makes a transmission of the service optical signal more stable and the service optical signal received by the ONT stronger.

As shown in FIG. 4, the optical distribution network further includes N stages of optical splitters, M filters, and K doped optical waveguides 34, at least one optical splitter 32 is provided at each stage, and N, M, K each are a positive integer. Each of the at least one optical splitter 32 includes a plurality of branch ports 321, an optical path of at least one of the plurality of branch ports 321 is provided with the filter 33, and the filter 33 is connected in series with an input terminal of the doped optical waveguide 34, and is configured to select the wavelength of the optical detection signal, that is, to control the optical detection signal to pass or be blocked, for example, control the optical detection signal to be transmitted, blocked, or reflected. The filter 33 includes a bandpass filter, a band-stop filter, or a narrowband reflective filter, but the filter transmits upstream service optical signals and downstream service optical signals in the PON. The doped optical waveguide 34 is disposed on an optical path following the filter 33, and an absorption spectrum of the doped optical waveguide 34 includes the wavelength of the optical detection signal and the wavelength of the service optical signal.

Illustratively, the optical distribution network includes two cascaded stages of optical splitters, i.e., a first-stage optical splitter L1 and a second-stage optical splitter L2, the first-stage optical splitter L1 is in signal connection with the second-stage optical splitter L2 through an optical waveguide, and the second-stage optical splitter L2 is in signal connection with the ONT 4 through an optical waveguide. For ease of description, in the present disclosure, an optical waveguide preceding an input port of the first-stage optical splitter L1 is referred to as a trunk optical waveguide (e.g., feeder fiber), an optical waveguide between an output port of the first-stage optical splitter L1 and an input port of the second-stage optical splitter L2 is referred to as a distribution optical waveguide (e.g., distribution fiber), and an optical waveguide following an output port of the second-stage optical splitter L2 is referred to as a branch optical waveguide (e.g., drop fiber).

The optical splitter at each stage includes a plurality of branch ports 321, and at least one filter 33 and one doped optical waveguide 34 are provided at each branch port 321; since the insertion loss of the service optical signal is reduced during the optical detection signal being injected into the doped optical waveguide 34, merely one doped optical waveguide 34 is to be provided at each branch port 321 in the present disclosure.

In some implementations, the optical distribution network further includes a WDM module 31, which is disposed between an optical detection signal transceiver module 11, an OLT optical transceiver module 12 and the optical splitter 32 for combining and splitting optical signals.

In some implementations, the optical detection signal includes at least one of a saturation absorption mode signal or a tunable-wavelength optical time-domain reflectometer (OTDR) mode signal.

The saturation absorption mode signal is configured to change the absorption coefficient of the service optical signal. Compared with that no saturation absorption mode signal is injected into the doped optical waveguide, injecting the saturation absorption mode signal into the doped optical waveguide can reduce the insertion loss of the service optical signal; moreover, whether a power change of the service optical signal is caused by a fluctuation of the service optical signal itself or by the injected saturation absorption mode signal can be determined based on a power variation of the service optical signal.

In some implementations, the saturation absorption mode signal includes a tunable-wavelength saturation absorption mode signal and a fixed-wavelength saturation absorption mode signal.

In some implementations, the saturation absorption mode signal includes at least one of a continuous optical signal, an OTDR pulse optical signal, a pulse-coded optical signal, or a Linear Frequency Modulation (LFM) optical signal. In practical applications, the saturation absorption mode signal may be varied as desired. For example, the continuous optical signal, the pulse-coded optical signal, or the LFM optical signal may be selected as the saturation absorption mode signal as desired.

The tunable-wavelength OTDR mode signal is configured to detect quality of an optical link and topology of the optical distribution network. Like the saturation absorption mode signal, the tunable-wavelength OTDR mode signal can also reduce the insertion loss of the service optical signal. A corresponding relationship between the ONTs and the branch ports of the optical splitter can be determined based on the power variations of the service optical signal and wavelengths of the tunable-wavelength OTDR mode signal, so as to determine the topology of the optical distribution network.

In some implementations, the tunable-wavelength OTDR mode signal includes at least one of a pulse optical signal, a pulse-coded optical signal, or an LFM optical signal. In practical applications, the tunable-wavelength OTDR mode signal may be varied as desired. For example, the pulse optical signal, the pulse-coded optical signal, or the LFM optical signal may be selected as the tunable-wavelength OTDR mode signal as desired.

In some implementations, since the feature of the doped optical waveguide is an important factor affecting the power variation of the service optical signal, disposing the doped optical waveguides having different features at different branch ports can change the power variation of the service optical signal. Lengths of the doped optical waveguides corresponding to the branch ports in the optical distribution network may be different or the same, and contents of doping elements in the doped optical waveguides corresponding to the branch ports may be different or the same, that is, lengths of different doped optical waveguides are different or the same, and/or, contents of doping elements in different doped optical waveguides are different or the same; the power variation of the service optical signal can be changed by changing the feature of the doped optical waveguide.

Absorption coefficients of optical signals with different wavelengths in the doped optical waveguide may be different. In the present disclosure, the wavelength of the optical detection signal is within the absorption spectrum of the doped optical waveguide. The wavelength of the service optical signal is within the absorption spectrum of the doped optical waveguide. For example, a wavelength of at least one service optical signal is within the absorption spectrum of the doped optical waveguide.

FIG. 5 illustrates an absorption spectrum of an erbium-doped optical waveguide for a single wavelength, with the abscissa representing wavelength in nanometers (nm) and the ordinate representing absorption coefficient in decibels/meter (dB/m). FIG. 5 illustrates an absorption coefficient of the light with a wavelength of about 1530 nm in the erbium-doped optical waveguide.

FIG. 6 illustrates an absorption spectrum of an erbium-doped optical waveguide for two wavelengths, with the abscissa representing wavelength in nanometers (nm) and the ordinate representing absorption coefficient in decibels/meter (dB/m). FIG. 6 shows a spectrum diagram illustrating an absorption coefficient of the light with a wavelength of about 1490 nm and a wavelength of about 1580 nm in the erbium-doped optical waveguide, in the presence of two wavelengths.

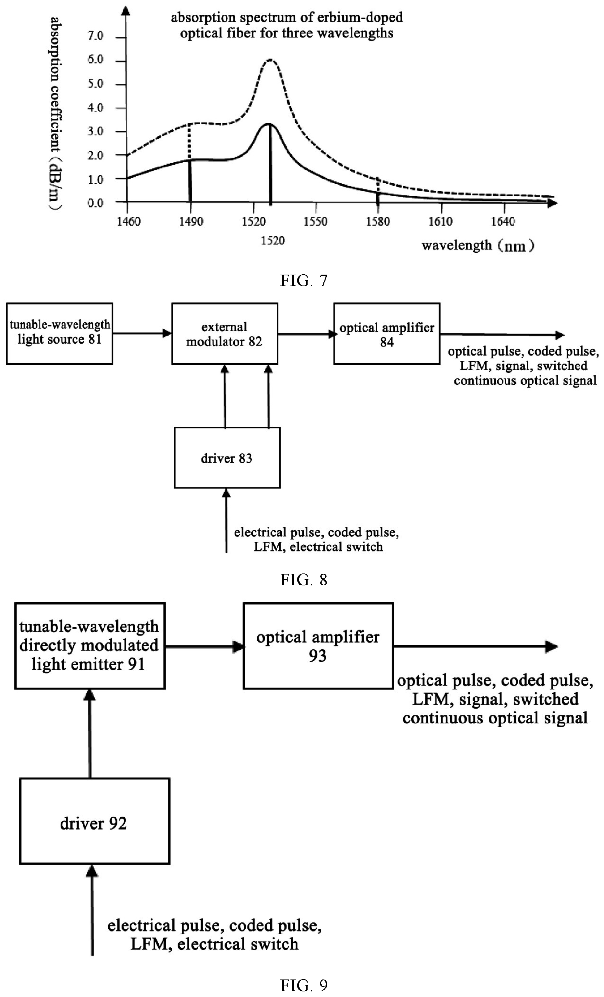

FIG. 7 illustrates an absorption spectrum of an erbium-doped optical waveguide for three wavelengths, with the abscissa representing wavelength in nanometers (nm) and the ordinate representing absorption coefficient in decibels/meter (dB/m). FIG. 7 shows a spectrum diagram illustrating an absorption coefficient of the light with a wavelength of about 1490 nm, a wavelength of about 1530 nm and a wavelength of about 1580 nm in the erbium-doped optical waveguide, in the presence of three wavelengths.

It should be noted that the wavelength of 1490 nm and the wavelength of 1580 nm correspond to a downstream service wavelength of a Gigabit Passive Optical Network (GPON) and a downstream service wavelength of 10G(symmetric) Passive Optical network (XG(S) PON), respectively; the erbium-doped optical waveguide in the present disclosure is also applicable to PONs in the future, as long as wavelengths therein are within the absorption spectrum of the erbium-doped optical waveguide.

In some implementations, the wavelength of the optical detection signal is in an absorption peak band of the doped optical waveguide. The optical detection signal with the wavelength in the absorption peak band of the doped optical waveguide can more effectively reduce the insertion loss of the service optical signal and increase the power variation of the service optical signal, thereby facilitating topology visualization and fault detection.

In a second aspect, the present disclosure provides an optical distribution system. As shown in FIG. 4, the optical distribution system includes an optical detection signal transceiver module 11, an OLT optical transceiver module 12, ONTs 4, and an ODN 3, the ODN 3 is configured to enable a signal connection between the optical detection signal transceiver module 11 and the ONTs 4 and enable a signal connection between the OLT optical transceiver module 12 and the ONTs 4. The ODN 3 adopts the optical distribution network provided in the first aspect, and will not be described herein.

In the ODN 3, since the doped optical waveguides are disposed at the branch ports, during the optical detection signal and the service optical signal being transmitted in the doped optical waveguides, a part of a power of the optical detection signal is converted into ASE noise; compared with that merely the service optical signal is transmitted in the doped optical waveguides, a part of ASE noise comes from the optical detection signal, an attenuation effect of the service optical signal is weakened, that is, an insertion loss of the service optical signal is reduced, which makes a transmission of the service optical signal more stable and the service optical signal received by the ONT stronger.

In some implementations, the optical detection signal transceiver module 11 includes a tunable-wavelength dual-mode optical transmission module configured to generate the optical detection signal. The optical detection signal includes at least one of a saturation absorption mode signal or a tunable-wavelength OTDR mode signal. The saturation absorption mode signal is configured to change an absorption coefficient of the service optical signal; the saturation absorption mode signal includes a tunable-wavelength saturation absorption mode signal and a fixed-wavelength saturation absorption mode signal. The tunable-wavelength OTDR mode signal is configured to detect quality of an optical link and topology of the optical distribution network. The tunable-wavelength dual-mode optical transmission module is different from the PUMP light in that the tunable-wavelength dual-mode optical transmission module does not need an optical switch, which simplifies a structure of the optical detection signal transceiver module 11, thereby simplifying a structure of the optical distribution system.

FIG. 8 is a block diagram of a tunable-wavelength dual-mode optical transmission module according to the present disclosure. As shown in FIG. 8, the tunable-wavelength dual-mode optical transmission module includes a tunable-wavelength light source 81, an external modulator 82, a driver 83, and an optical amplifier 84, the tunable-wavelength light source 81 is configured to generate a tunable-wavelength light, the driver 83 is configured to drive the external modulator 82, the external modulator 82 is driven by the driver 83 to modulate the tunable-wavelength light to generate the optical detection signal, and the optical amplifier 84 is configured to amplify the optical detection signal.

FIG. 9 is a block diagram of a tunable-wavelength dual-mode optical transmission module according to the present disclosure. As shown in FIG. 9, the tunable-wavelength dual-mode optical transmission module includes a tunable-wavelength directly modulated light emitter 91, a driver 92, and an optical amplifier 93, the driver 92 is configured to drive the tunable-wavelength directly modulated light emitter 91, the tunable-wavelength directly modulated light emitter 91 is driven by the driver 92 to generate the optical detection signal, and the optical amplifier 93 is configured to amplify the optical detection signal.

In some implementations, the optical detection signal is an optical signal with a single wavelength, and includes at least one of a single pulse signal, a coded pulse signal, or an LFM signal.

In the optical distribution system provided in the present disclosure, with the optical distribution network provided in the first aspect, a part of energy of the optical detection signal is converted into ASE noise, so that the energy of the service optical signal converted into ASE noise is reduced, which weakens the attenuation effect of the service optical signal in the doped optical waveguide, accordingly, reduces the insertion loss of the service optical signal, and indirectly enhances the service optical signal received by the ONT. As for the doped optical waveguide, just a single-doped optical waveguide can adjust the power of the service optical signal, which simplifies a structure of the optical distribution network; moreover, the doped optical waveguide does not need a cooperation of PUMP light, which simplifies a structure of the optical distribution system, thereby reducing manufacturing cost of the optical distribution network and the optical distribution system.

In a third aspect, the present disclosure provides an optical power perturbation method, including: adjusting a power of a service optical signal in a doped optical waveguide by using an optical detection signal; the optical detection signal adjusts the power of the service optical signal by changing an absorption coefficient of the service optical signal in the doped optical waveguide.

In some implementations, a doping element in the doped optical waveguide includes at least one of erbium, thulium, or rubidium.

In some implementations, the optical detection signal includes at least one of a saturation absorption mode signal or a tunable-wavelength OTDR mode signal. The saturation absorption mode signal is configured to change the absorption coefficient of the service optical signal, that is, an attenuation of the service optical signal is reduced by using the saturation absorption mode signal, so as to realize perturbation detection for the service optical signal. The saturation absorption mode signal includes a tunable-wavelength saturation absorption mode signal and a fixed-wavelength saturation absorption mode signal.

In some implementations, the saturation absorption mode signal includes at least one of a continuous optical signal, a pulse-coded optical signal, or an LFM optical signal.

The tunable-wavelength OTDR mode signal is configured to detect topology of an optical distribution network, that is, the attenuation of the service optical signal is reduced by using the tunable-wavelength OTDR mode signal, and the topology of the optical distribution network is acquired based on a power variation of the service optical signal.

In some implementations, the tunable-wavelength OTDR mode signal includes at least one of an OTDR pulse optical signal, a pulse-coded optical signal, or an LFM optical signal.

In some implementations, wavelengths of the service optical signal and the optical detection signal are within an absorption spectrum of the doped optical waveguide. In some implementations, the wavelength of the optical detection signal is in an absorption peak band of the doped optical waveguide, which can increase the power variation of the service optical signal, thereby improving a perturbation effect.

In some implementations, the saturation absorption mode signal and the tunable-wavelength OTDR mode signal are of a same type, for example, each are the LFM optical signal, and are transmitted in the doped optical waveguide, the doped optical waveguide adjusts the absorption coefficient of the service optical signal by using the saturation absorption mode signal, and a receiving module in an optical detection signal transceiver module receives Rayleigh scattering and Fresnel reflection signals transmitted backwards due to the tunable-wavelength OTDR mode signal, thereby realizing a detection on quality of an optical link and a restoration of topology of the optical distribution network.

In some implementations, the saturation absorption mode signal and the tunable-wavelength OTDR mode signal are transmitted in the doped optical waveguide at different times, that is, the saturation absorption mode signal and the tunable-wavelength OTDR mode signal are injected into the doped optical waveguide at different times to respectively adjust the absorption coefficient of the service optical signal, so as to obtain visualized topology of an ONT and achieve the detection on quality of the optical link and the restoration of topology of the optical distribution network.

In response to the optical detection signal being the fixed-wavelength saturation absorption mode signal, the optical power perturbation method further includes: following operations S101 to S104.

At operation S101, the ONT receives the service optical signal, and determines a first power of the service optical signal.

The first power of the service optical signal is a power of the service optical signal received by the ONT in the absence of the optical detection signal. How the ONT determines the first power of the service optical signal based on the service optical signal is not limited in the present disclosure.

At operation S102, the ONT acquires the service optical signal with the power adjusted in the doped optical waveguide, and determines a second power based on the service optical signal with the power adjusted.

During the saturation absorption mode signal being transmitted in the doped optical waveguide, the power of the service optical signal is affected; the ONT determines the second power based on the received service optical signal.

With the saturation absorption mode signal generated by a tunable-wavelength dual-mode optical transmission module being injected into the ODN, the doped optical waveguide converts part of a power of the saturation absorption mode signal into ASE noise, thereby changing the absorption coefficient of the service optical signal, reducing an insertion loss of the service optical signal, and indirectly increasing the power of the service optical signal. The ONT receives the adjusted service optical signal (i.e., the service optical signal having the power adjusted), and obtains the second power based on the adjusted service optical signal.

In the present disclosure, a selection for a wavelength may be performed on the saturation absorption mode signal by a filter before the saturation absorption mode signal is transmitted to the doped optical waveguide. In the present disclosure, the filter includes, but is not limited to, a bandpass filter, a band-stop filter, or a narrowband reflective filter.

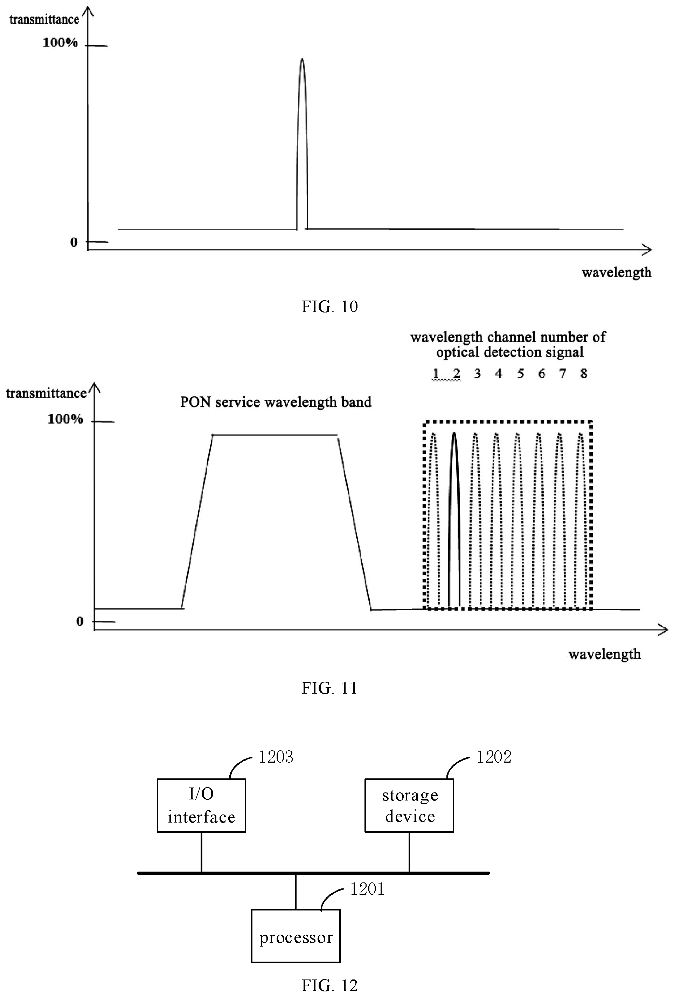

In response to the filter being the band-stop or narrowband reflective filter, the band-stop or narrowband reflective filter filters the saturation absorption mode signal. FIG. 10 is a transmission spectrum diagram of optical signals blocked or attenuated by a band-stop or narrowband reflective filter, with the abscissa representing wavelength and the ordinate representing transmittance. As shown in FIG. 10, during the saturation absorption mode signals enter the band-stop or narrowband reflective filter, the saturation absorption mode signals with certain wavelengths (as shown by the peak) can pass through, but the saturation absorption mode signals with other wavelengths are blocked.

In some implementations, the wavelength of the service optical signal is different from that of the saturation absorption mode signal. In response to the saturation absorption mode signal being blocked or attenuated by the band-stop or narrowband reflective filter and a downstream service optical signal passing through the band-stop or narrowband reflective filter, merely the service optical signal enters the doped optical waveguide, the service optical signal is not affected by the saturation absorption mode signal, and the power variation of the service optical signal is less than a first threshold. In response to the saturation absorption mode signal being not blocked or attenuated by the band-stop or narrowband reflective filter, a part of energy of the saturation absorption mode signal is converted into ASE noise in the doped optical waveguide, which reduces the absorption coefficient of the service optical signal, and reduces a conversion of the downstream service optical signal into ASE noise; thus, the power variation of the service optical signal is relatively great, and is generally greater than a second threshold.

In response to the saturation absorption mode signal entering a bandpass filter, the saturation absorption mode signal with a wavelength the same as that of the bandpass filter can pass through the bandpass filter, and the saturation absorption mode signal with wavelengths different from that of the bandpass filter are attenuated or blockd by the bandpass filter.

FIG. 11 is a transmission spectrum diagram of service optical signals and optical detection signals transmitted through a bandpass filter according to the present disclosure, with the abscissa representing wavelength and the ordinate representing transmittance. As shown in FIG. 11, the transmittance of the optical detection signal having the same wavelength as the bandpass filter is close to 100%, that is, the optical detection signal can pass through the bandpass filter; the transmittance of the optical detection signal having the wavelength different from that of the bandpass filter are close to 0. For example, the transmittance of the optical detection signal with a wavelength channel number of 2 is close to 100%, and transmittances of optical detection signals with respective wavelength channel numbers of "1" and "3" to "8" each are close to 0.

Illustratively, in response to the saturation absorption mode signal with a first wavelength entering the bandpass filter with a second wavelength (the second wavelength is different from the first wavelength), the saturation absorption mode signal with the first wavelength is blocked or attenuated by the bandpass filter, and therefore, the downstream service optical signal is not affected by the saturation absorption mode signal, and the power variation of the downstream service optical signal is less than the first threshold; in response to the saturation absorption mode signal with the first wavelength passing through the bandpass filter with the first wavelength with a transmittance close to 100%, a part of the energy of the saturation absorption mode signal is converted into ASE noise in the doped optical waveguide, the absorption coefficient of the downstream service optical signal is reduced, and the power variation of the downstream service optical signal is greater than the second threshold.

At operation S103, the ONT determines a first power variation of the service optical signal based on the first power and the second power.

The ONT calculates a difference between the first power and the second power to obtain the first power variation of the service optical signal.

At operation S104, the ONT determines whether a power gain of the service optical signal received by the ONT is caused by the optical detection signal based on the first power variation of the service optical signal, the first threshold, and the second threshold.

The first threshold and the second threshold are set in advance, and the first threshold is less than or equal to the second threshold.

In response to the first power variation being less than the first threshold, the power gain of the service optical signal is caused by a power fluctuation of the service optical signal; in response to the first power variation being greater than the second threshold, the power gain of the service optical signal is caused by the optical detection signal.

In some implementations, the optical power perturbation method further includes: determining a connection relationship between the ONT and a branch port of an optical splitter based on the first power variation of the service optical signal and a corresponding relationship between power variations of the service optical signal and doped optical waveguides connected in series with branch ports of the optical splitter; determining a topology of the ONT based on the connection relationship between the ONT and the branch port of the optical splitter.

The power variation of the service optical signal corresponds to a feature of the doped optical waveguide, the doped optical waveguides having different features cause different power variations of the service optical signal; after a corresponding relationship between the features of the doped optical waveguides and the branch ports of the optical splitter is set in advance, the connection relationship between the ONT and the branch port of the optical splitter can be determined based on the first power variation and the corresponding relationship between the power variations and the doped optical waveguides connected in series with the branch ports of the optical splitter; then the topology of the ONT is determined based on the connection relationship between the ONT and the branch port of the optical splitter.

In some implementations, in response to the optical detection signal being the tunable-wavelength saturation absorption mode signal, the optical power perturbation method further includes: following operations S201 to S205.

At operation S201, the ONT receives the service optical signal from an OLT, and determines a third power of the service optical signal.

The third power of the service optical signal is a power of the service optical signal received by the ONT in the absence of the optical detection signal. How the ONT determines the third power of the service optical signal based on the service optical signal is not limited in the present disclosure.

At operation S202, the ONT acquires the service optical signal having the power adjusted in the doped optical waveguide, and determines a fourth power based on the service optical signal having the power adjusted.

After passing through the filter, the tunable-wavelength saturation absorption mode signal adjusts the absorption coefficient of the service optical signal in the doped optical waveguide. A part of energy of the tunable-wavelength saturation absorption mode signal is converted into ASE noise, which reduces the absorption coefficient of the service optical signal, reduces the insertion loss of the service optical signal, and indirectly increases the power of the service optical signal. The fourth power can be determined based on the adjusted service optical signal.

At operation S203, the ONT determines a second power variation of the service optical signal based on the third power and the fourth power.

The ONT calculates a difference between the third power and the fourth power to obtain the second power variation of the service optical signal.

At operation S204, each ONT determines a corresponding relationship between the ONT and a branch port of an optical splitter based on the second power variation of the service optical signal and a corresponding relationship between a center wavelength of the tunable-wavelength saturation absorption mode signal and the filter at the branch port of the optical splitter.

The center wavelength of the tunable-wavelength saturation absorption mode signal is a center wavelength allowed to pass through the filter; different filters allow or forbid tunable-wavelength saturation absorption mode signals with different center wavelengths to pass through

In the present disclosure, the filter can select the wavelength of the optical signal, the center wavelength of the tunable-wavelength saturation absorption mode signal passing through the filter has a corresponding relationship with the filter, and the branch port of the optical splitter has a corresponding relationship with the filter, that is, the center wavelength of the tunable-wavelength saturation absorption mode signal has a corresponding relationship with the branch port of the optical splitter, and the branch port of the optical splitter can be determined based on the center wavelength of the tunable-wavelength saturation absorption mode signal passing through the filter. On this basis, the ONT determines the center wavelength of the tunable-wavelength saturation absorption mode signal allowed or forbidden to pass through the filter based on the second power variation and the center wavelength of the tunable-wavelength saturation absorption mode signal, and determines the branch port of the optical splitter connected with the ONT based on the center wavelength of the tunable-wavelength saturation absorption mode signal allowed or forbidden to pass through the filter, and the corresponding relationship between the center wavelength of the tunable-wavelength saturation absorption mode signal and the branch port of the optical splitter.

At operation S205, the topology of the ONT is determined based on the corresponding relationship between the ONT and the branch port of the optical splitter.

The topology of each ONT is determined based on the corresponding relationship between the ONT and the branch port of the optical splitter.

In some implementations, the optical power perturbation method further includes: acquiring an optical waveguide link curve between the OLT and the ONT; based on the optical waveguide link curve, determining a location of the optical splitter, a length of a trunk optical waveguide, a length of a distribution optical waveguide, and a length of a branch optical waveguide in the optical distribution network; determining the topology of the optical distribution network based on the location of the optical splitter, the length of the trunk optical waveguide, the length of the distribution optical waveguide, and the length of the branch optical waveguide in the optical distribution network.

In some implementations, in response to the optical detection signal being a tunable-wavelength OTDR mode signal, the optical power perturbation method further includes: following operations S301 to S305.

At operation S301, the ONT receives the service optical signal from an OLT, and determines a third power of the service optical signal.

At operation S302, the ONT obtains the service optical signal having the power adjusted in the doped optical waveguide, and determines a fourth power based on the service optical signal having the power adjusted.

At operation S303, the ONT determines a second power variation of the service optical signal based on the third power and the fourth power.

Operation S301 to S303 are the same as operations S201 to S203, and will not be repeated here.

At operation S304, each ONT determines a corresponding relationship between the ONT and a branch port of the optical splitter based on the second power variation of the service optical signal and a corresponding relationship between a center wavelength of tunable-wavelength OTDR mode signal and the filter at the branch port of the optical splitter.

The center wavelength of the tunable-wavelength OTDR mode signal is a center wavelength allowed to pass through the filter; different filters allow or forbid the tunable - wavelength OTDR mode signals with different center wavelengths to pass through.

In the present disclosure, the center wavelength of the tunable-wavelength OTDR mode signal has a corresponding relationship with the filter, and the branch port of the optical splitter has a corresponding relationship with the filter, so that the center wavelength of the tunable-wavelength OTDR mode signal has a corresponding relationship with the branch port of the optical splitter, and the branch port of the optical splitter can be determined based on the center wavelength of the tunable-wavelength OTDR mode signal passing through the filter. On this basis, the ONT determines the center wavelength of the tunable-wavelength OTDR mode signal allowed or forbidden to pass through the filter based on the second power variation and the center wavelength of the tunable-wavelength saturation absorption mode signal, and then determines the branch port of the optical splitter connected with the ONT based on the center wavelength of the tunable-wavelength OTDR mode signal allowed or forbidden to pass through the filter, and the corresponding relationship between the center wavelength of the tunable-wavelength OTDR mode signal and the branch port of the optical splitter.

At operation S305, the topology of the ONT is determined based on the corresponding relationship between the ONT and the branch port of the optical splitter.

The topology of each ONT is determined based on the corresponding relationship between the ONT and the branch port of the optical splitter.

Operation S305 is the same as operation S205.

It should be noted that in the optical power perturbation method provided in the present disclosure, for the tunable-wavelength OTDR mode signal and the tunable-wavelength saturation absorption mode signal which have a same wavelength, ,a same filter may be adopted, that is, the filter is not to be changed, as long as the tunable-wavelength OTDR mode signal and the tunable-wavelength saturation absorption mode signal adopt the same wavelength, which not only achieves optical power perturbation by different mode signals but also simplifies a structure of an optical distribution system.

In some implementations, the optical power perturbation method further includes: acquiring Rayleigh backscattering and Fresnel reflection signals generated during the tunable-wavelength OTDR mode signal being transmitted in the optical distribution network; obtaining an OTDR optical link quality curve based on the Rayleigh backscattering and Fresnel reflection signals, with the OTDR optical link quality curve representing a corresponding relationship between power of the Rayleigh backscattering and Fresnel reflection signals and a distance along an optical waveguide serving as a medium connecting the ONT to the optical splitter.

In the optical power perturbation method provided in the present disclosure, during the service optical signal and the optical detection signal being transmitted in the doped optical waveguide, since the wavelength of the optical detection signal is different from that of the service optical signal, a part of the energy of the optical detection signal is converted into ASE noise, and the doped optical waveguide generates a new absorption effect on the service optical signal and the optical detection signal, so that the energy of the service optical signal converted into ASE noise is reduced, which weakens an attenuation effect of the service optical signal in the doped optical waveguide, accordingly reduces the insertion loss of the service optical signal, indirectly enhances the service optical signal received by the ONT, and since just a single-doped optical waveguide can adjust the power of the service optical signal, a structure of the optical distribution network is simplified; moreover, the doped optical waveguide does not require a cooperation of the PUMP light, which further simplifies the structure of the optical distribution system, thereby reducing manufacturing cost of the optical distribution network and the optical distribution system.

In a fourth aspect, referring to FIG. 12, the present disclosure provides an electronic device, including: at least one processor 1201; a storage device 1202 having stored therein at least one computer program which, when executed by the at least one processor 1201, causes the at least one processor 1201 to implement the optical power perturbation method described above; and at least one I/O interface 1203 connected between the processor 1201 and the storage device 1202 and configured to enable information interaction between the processor 1201 and the storage device 1202.

The processor 1201 is a device having a data processing capability, and includes, but is not limited to, a Central Processing Unit (CPU); the storage device 1202 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 1203 is connected between the processor 1201 and the storage device 1202, to enable the information interaction between the processor 1201 and the storage device 1202, and includes, but is not limited to, a data bus (Bus).

In some implementations, the processor 1201, the storage device 1202, and the I/O interface 1203 are connected to each other through a bus 1204, and then are connected to other components of a computing device.

In some implementations, the processor 1201 adjusts a power of a service optical signal in a doped optical waveguide by using an optical detection signal; the optical detection signal adjusts the power of the service optical signal by changing an absorption coefficient of the service optical signal in the doped optical waveguide.

In some implementations, the optical detection signal includes at least one of: a saturation absorption mode signal configured to change the absorption coefficient of the service optical signal; or a tunable-wavelength OTDR mode signal configured to detect optical link quality and topology of an optical distribution network.

In some implementations, the saturation absorption mode signal includes a tunable-wavelength saturation absorption mode signal and a fixed-wavelength saturation absorption mode signal. The saturation absorption mode signal and the tunable-wavelength OTDR mode signal are transmitted in the doped optical waveguide substantially simultaneously; alternatively, the saturation absorption mode signal and the tunable-wavelength OTDR mode signal are transmitted in the doped optical waveguide at different times.

In some implementations, the tunable-wavelength OTDR mode signal includes at least one of an OTDR pulse optical signal, a pulse-coded optical signal, or an LFM optical signal; the saturation absorption mode signal includes at least one of a continuous optical signal, a pulse-coded optical signal, or an LFM optical signal.

In some implementations, a wavelength of the service optical signal and a wavelength of the optical detection signal are within an absorption spectrum of the doped optical waveguide.

In some implementations, the wavelength of the optical detection signal is in an absorption peak band of the doped optical waveguide.

In some implementations, in response to the optical detection signal being the fixed-wavelength saturation absorption mode signal, the processor 1201 is further configured to receive the service optical signal and determine a first power of the service optical signal at an ONT; acquire the service optical signal having the power adjusted in the doped optical waveguide and determine a second power based on the service optical signal having the adjusted power at the ONT; determine a first power variation of the service optical signal based on the first power and the second power at the ONT; determine, at the ONT, whether a power gain of the service optical signal received at the ONT is caused by the optical detection signal based on the first power variation of the service optical signal, a first threshold, and a second threshold, with the first threshold and the second threshold being set in advance; and/or determine a connection relationship between the ONT and a branch port of an optical splitter based on the first power variation of the service optical signal and a corresponding relationship between power variations and doped optical waveguides connected in series with branch ports of the optical splitter, and determine a topology of the ONT based on the connection relationship between the ONT and the branch port of the optical splitter.

In some implementations, in response to the optical detection signal being the tunable-wavelength saturation absorption mode signal, the processor 1201 is further configured to receive the service optical signal from an OLT and determine a third power of the service optical signal at an ONT; acquire the service optical signal having the power adjusted in the doped optical waveguide and determine a fourth power based on the service optical signal having the adjusted power at the ONT; determine a second power variation of the service optical signal based on the third power and the fourth power at the ONT; determine, at the ONT, a corresponding relationship between the ONT and a branch port of an optical splitter based on the second power variation of the service optical signal and a corresponding relationship between a center wavelength of the tunable-wavelength saturation absorption mode signal and a filter at the branch port of the optical splitter; determine a topology of the ONT based on the corresponding relationship between the ONT and the branch port of the optical splitter.

In some implementations, the processor 1201 is further configured to acquire Rayleigh backscattering and Fresnel reflection signals generated during the tunable-wavelength OTDR mode signal being transmitted in the optical distribution network; obtain an OTDR optical link quality curve based on the Rayleigh backscattering and Fresnel reflection signals, with the OTDR optical link quality curve representing a corresponding relationship between power of the Rayleigh backscattering and Fresnel reflection signals and a distance along an optical waveguide serving as a medium connecting the ONT to the optical splitter.

In a fifth aspect, the present disclosure provides a computer-readable storage medium having stored therein a computer program which, when executed by a processor, causes the processor to implement the optical power perturbation method described above.

It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor (such as a CPU, a digital signal processor or a microprocessor), or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/non-volatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary implementations using specific terms, but the terms are merely used and should be merely interpreted as having general illustrative meanings, rather than for the purpose of limitation. Unless expressly stated otherwise, it is apparent to those of ordinary skill in the art that the features, characteristics and/or elements described in connection with a particular implementation can be used alone or in combination with the features, characteristics and/or elements described in connection with other implementations. Therefore, it should be understood by those of ordinary skill in the art that various changes in forms and details can be made without departing from the scope of the present disclosure as defined by the appended claims.

## Claims

1. An optical distribution network, comprising a doped optical waveguide, wherein an optical detection signal changes an absorption coefficient of a service optical signal in the doped optical waveguide to adjust a power of the service optical signal;
a wavelength of the optical detection signal is different from a wavelength of the service optical signal.

2. The optical distribution network of claim 1, further comprising N stages of optical splitters, M filters, and K doped optical waveguides, wherein at least one optical splitter is provided at each stage, and N, M, K each are a positive integer;
each of the at least one optical splitter comprises a plurality of branch ports, at least one of the plurality of branch ports is provided with the filter, and the filter is connected in series with an input terminal of the doped optical waveguide, and is configured to select the wavelength of the optical detection signal and transmit the service optical signal, so as to enable the optical detection signal to be transmitted, blocked, or reflected.

3. The optical distribution network of claim 1 or 2, wherein the optical detection signal comprises at least one of:
a saturation absorption mode signal, configured to change the absorption coefficient of the service optical signal; or
a tunable-wavelength optical time-domain reflectometer (OTDR) mode signal, configured to detect optical link quality and topology of the optical distribution network.

4. The optical distribution network of claim 3, wherein the saturation absorption mode signal comprises a tunable-wavelength saturation absorption mode signal and a fixed-wavelength saturation absorption mode signal.

5. The optical distribution network of claim 3, wherein the saturation absorption mode signal comprises at least one of a continuous optical signal, a pulse-coded optical signal, or a linear frequency modulation optical signal;
the tunable-wavelength OTDR mode signal comprises at least one of a pulse optical signal, a pulse-coded optical signal, or a linear frequency modulation optical signal.

6. The optical distribution network of claim 2, wherein the doped optical waveguides have at least one of following features:
lengths of different doped optical waveguides are different or the same; and/or
contents of a doping element in different doped optical waveguides are different or the same.

7. The optical distribution network of claim 1, wherein a doping element in the doped optical waveguide comprises at least one of erbium, thulium, or rubidium.

8. An optical distribution system, comprising an optical detection signal transceiver module, an Optical Line Terminal (OLT) optical transceiver module, an optical network termination, and the optical distribution network of any one of claims 1 to 7, the optical distribution network being configured to enable a signal connection between the optical detection signal transceiver module and the optical network termination and enable a signal connection between the OLT optical transceiver module and the optical network termination.

9. The optical distribution system of claim 8, wherein the optical detection signal transceiver module comprises a tunable-wavelength dual-mode optical transmission module, configured to generate the optical detection signal.

10. The optical distribution system of claim 9, wherein the tunable-wavelength dual-mode optical transmission module comprises a tunable-wavelength light source, an external modulator, a driver, and an optical amplifier, wherein the tunable - wavelength light source is configured to generate a tunable-wavelength light, the driver is configured to drive the external modulator, the external modulator is driven by the driver to modulate the tunable-wavelength light to generate the optical detection signal, and the optical amplifier is configured to amplify the optical detection signal.

11. The optical distribution system of claim 9, wherein the tunable-wavelength dual-mode optical transmission module comprises a tunable-wavelength directly modulated light emitter, a driver, and an optical amplifier, wherein the driver is configured to drive the tunable-wavelength directly modulated light emitter, the tunable-wavelength directly modulated light emitter is driven by the driver to generate the optical detection signal, and the optical amplifier is configured to amplify the optical detection signal.

12. An optical power perturbation method performed by the optical distribution system of any one of claims 8 to 11, comprising:
adjusting a power of a service optical signal in a doped optical waveguide by using an optical detection signal, wherein the optical detection signal adjusts the power of the service optical signal by changing an absorption coefficient of the service optical signal in the doped optical waveguide.

13. The optical power perturbation method of claim 12, wherein the optical detection signal comprises at least one of:
a saturation absorption mode signal, configured to perform perturbation detection on the service optical signal;
a tunable-wavelength OTDR mode signal, configured to detect optical link quality and topology of the optical distribution network.

14. The optical power perturbation method of claim 13, wherein the saturation absorption mode signal comprises a tunable-wavelength saturation absorption mode signal and a fixed-wavelength saturation absorption mode signal.

15. The optical power perturbation method of claim 13, wherein the saturation absorption mode signal and the tunable-wavelength OTDR mode signal are of a same type, and are transmitted in the doped optical waveguide substantially simultaneously; or the saturation absorption mode signal and the tunable-wavelength OTDR mode signal are of a same type or different types, and are transmitted in the doped optical waveguide at different times.

16. The optical power perturbation method of claim 13, wherein the tunable-wavelength OTDR mode signal comprises at least one of a pulse optical signal, a pulse-coded optical signal, or a linear frequency modulation optical signal;
the saturation absorption mode signal comprises at least one of a continuous optical signal, a pulse-coded optical signal, or a linear frequency modulation optical signal.

17. The optical power perturbation method of claim 13, wherein wavelengths of the service optical signal and the optical detection signal are within an absorption spectrum of the doped optical waveguide.

18. The optical power perturbation method of claim 17, wherein the wavelength of the optical detection signal is in an absorption peak band of the doped optical waveguide.

19. The optical power perturbation method of claim 13, wherein in response to the optical detection signal being the fixed-wavelength saturation absorption mode signal, the method further comprises:
by the optical network termination, receiving the service optical signal, and determining a first power of the service optical signal;
by the optical network termination, acquiring the service optical signal having the power adjusted in the doped optical waveguide, and determining a second power based on the service optical signal having the power adjusted;
by the optical network termination, determining a first power variation of the service optical signal based on the first power and the second power;
by the optical network termination, determining whether a power gain of the service optical signal received by the optical network termination is caused by the optical detection signal based on the first power variation of the service optical signal, a first threshold, and a second threshold, wherein the first threshold and the second threshold are set in advance.

20. The optical power perturbation method of claim 19, further comprising:
determining a connection relationship between the optical network termination and a branch port of an optical splitter based on the first power variation of the service optical signal and a corresponding relationship between power variations and doped optical waveguides connected in series with branch ports of the optical splitter;
determining topology of the optical network termination based on the connection relationship between the optical network termination and the branch port of the optical splitter.

21. The optical power perturbation method of claim 13, wherein in response to the optical detection signal being the tunable-wavelength saturation absorption mode signal, the method further comprises:
by the optical network termination, receiving the service optical signal from an OLT, and determining a third power of the service optical signal;
by the optical network termination, acquiring the service optical signal having the power adjusted in the doped optical waveguide, and determining a fourth power based on the service optical signal having the power adjusted;
by the optical network termination, determining a second power variation of the service optical signal based on the third power and the fourth power;
by the optical network termination, determining a corresponding relationship between the optical network termination and a branch port of an optical splitter based on the second power variation of the service optical signal and a corresponding relationship between a center wavelength of the tunable-wavelength saturation absorption mode signal and a filter at the branch port of the optical splitter;
determining topology of the optical network termination based on the corresponding relationship between the optical network termination and the branch port of the optical splitter.

22. The optical power perturbation method of claim 13, wherein in response to the optical detection signal being the tunable-wavelength OTDR mode signal, the method further comprises:
by the optical network termination, receiving the service optical signal from an OLT, and determining a third power of the service optical signal;
by the optical network termination, acquiring the service optical signal having the power adjusted in the doped optical waveguide, and determining a fourth power based on the service optical signal having the power adjusted;
by the optical network termination, determining a second power variation of the service optical signal based on the third power and the fourth power;
by the optical network termination, determining a corresponding relationship between the optical network termination and a branch port of an optical splitter based on the second power variation of the service optical signal and a corresponding relationship between a center wavelength of the tunable-wavelength OTDR mode signal and a filter at the branch port of the optical splitter;
determining topology of the optical network termination based on the corresponding relationship between the optical network termination and the branch port of the optical splitter.

23. The optical power perturbation method of claim 22, further comprising:
acquiring Rayleigh backscattering and Fresnel reflection signals generated during the tunable-wavelength OTDR mode signal being transmitted in the optical distribution network, wherein a same filter is adopted for the tunable-wavelength OTDR mode signal and the tunable-wavelength saturation absorption mode signal having a same wavelength;
obtaining an OTDR optical link quality curve based on the Rayleigh backscattering and Fresnel reflection signals, wherein the OTDR optical link quality curve represents a corresponding relationship between power of the Rayleigh backscattering and Fresnel reflection signals and a distance along an optical waveguide serving as a medium connecting the optical network termination to the optical splitter.

24. The method of claim 12, wherein a doping element in the doped optical waveguide comprises at least one of erbium, thulium, or rubidium.
